# EUROPÄISCHE PATENTANMELDUNG

(11) **EP 4 120 486 A1**
(43) Veröffentlichungstag der Anmeldung: **18.01.2023**
(21) Anmeldenummer: 22183926.9
(22) Anmeldetag: 08.07.2022
(51) Int. Cl.: H02B 1/04, H02B 1/052, H02G 3/10, H02G 3/06, H02G 3/00, H02B 1/048, H02B 1/32, H02B 1/48, H02B 1/044, H02B 1/42, H02G 3/32, H02B 1/03, H02G 3/08, H02G 3/04

(54) **BAUTEILHALTER ZUR BEFESTIGUNG AN EINEM LOCHRASTER**

(30) Priorität: 13.07.2021 DE 202021002363 U
(71) Anmelder: ABN GmbH, 74196 Neuenstadt (DE)
(72) Erfinder: HÖHN, Werner, 74196 Neuenstadt (DE); ORSAG, Andrej, 74196 Neuenstadt (DE); BRAUN, Andreas, 74196 Neuenstadt (DE)
(74) Vertreter: Schmid, Barbara

(57) **Zusammenfassung**

Die Erfindung betrifft einen Bauteilhalter (190) zur Befestigung an einem Lochraster, insbesondere an einem Lochraster für die LexCom Home-Schnellbefestigung. Der Bauteilhalter (190) besitzt eine Bauteilaufnahme (192) und zumindest ein Fixierelement (198) unterhalb der Bauteilaufnahme (192). Durch das Fixierelement (198) kann der Bauteilhalter (190) an dem Lochraster fixiert werden. Erfindungsgemäß sind zwei Rasthaken (200) vorhanden, mittels denen der Bauteilhalter (190) an dem Lochraster befestigt werden kann. Dabei sind die beiden Rasthaken (200) beidseitig der Bauteilaufnahme (192) angeordnet. Der Bauteilhalter kann insbesondere als Wellrohrhalter (190) oder als Hutschienenhalter ausgebildet sein.

## Beschreibung

### TECHNISCHES GEBIET

Die Erfindung betrifft einen Bauteilhalter zur Befestigung an einem Lochraster. Ein solches Lochraster kann beispielswiese bei einer Mediabox für den universellen Einsatz in einem Zählerschrank vorhanden sein. Dabei kann die Montage der Mediabox insbesondere an der Schnittstelle zwischen dem Hausübergabepunkt (HÜP) und dem Zählerplatz oder im Raum für Zusatzanwendungen (RfZ) erfolgen. In einer solchen Mediabox kann die Montage von zusätzlichen Betriebsmitteln des Netzbetreibers, des Messstellenbetreibers oder des Messdienstleisters erfolgen. Dabei kann es sich beispielsweise um ein "Smart Meter Gateway", um Kommunikationsanbindungen zum Hausübergabepunkt (LMN, HAN, WAN), um Tarifumschaltrelays, um Sicherungen oder um Schaltuhren handeln.

### STAND DER TECHNIK

Für den Einsatz in netzseitigen oder anlagenseitigen Anschlussräumen sind verschiedene Funktionsräume - beispielsweise RfZ-APZ-Räume - dem Grunde nach bekannt. Sie dienen der Montage von verschiedenen elektronischen Bauteilen und ermöglichen einen sicheren, störungsfreien und manipulationssicheren Betrieb.

### DARSTELLUNG DER ERFINDUNG

Ausgehend von diesem vorbekannten Stand der Technik liegt der Erfindung die Aufgabe zugrunde, einen verbesserten Bauteilhalter anzugeben, der möglichst einfach, flexibel und sicher montiert werden kann.

Der erfindungsgemäße Bauteilhalter zur Befestigung an einem Lochraster ist durch die Merkmale des Hauptanspruchs 1 gegeben. Sinnvolle Weiterbildungen der Erfindung sind Gegenstand von sich an diesen Anspruch anschließenden weiteren Ansprüchen.

Der erfindungsgemäße Bauteilhalter besitzt eine Bauteilaufnahme sowie zumindest ein Fixierelement unterhalb der Bauteilaufnahme. Mittels des Fixierelements kann der Bauteilhalter an dem Lochraster fixiert werden. Darüber hinaus weist der Bauteilhalter beidseitig der Bauteilaufnahme jeweils einen Rasthaken auf, der der Befestigung des Bauteilhalters an dem Lochraster dient.

Bei dem Lochraster kann es sich vorzugsweise um ein Lochraster für die "LexCom Home"-Schnellbefestigung handeln. Ein solches Lochraster kann insbesondere bei der Montageplatte einer Mediabox oder im Montagebereich einer Mediaplatte vorhanden sein (siehe auch DE 20 2021 002 363 U1)

In einer ersten Ausführungsform kann der Bauteilhalter als Wellrohrhalter ausgebildet sein. Der Wellrohrhalter besitzt eine C-förmige Wellrohraufnahme sowie zumindest ein Fixierelement unterhalb der Wellrohraufnahme. Mittels des Fixierelements kann der Wellrohrhalter an dem Lochraster fixiert werden. Darüber hinaus weist der Wellrohrhalter beidseitig der Wellrohraufnahme jeweils einen Rasthaken auf, der der Befestigung des Wellrohrhalters an dem Lochraster dient.

Um ein Verrutschen des Wellrohres in dem Wellrohrhalter zu verhindern, kann der Wellrohrhalter an seiner C-förmigen Wellrohraufnahme zumindest eine Profilfeder aufweisen, die in eine der Zickzacknute des Wellrohres eingreifen kann. Auf diese Weise kann eine Zugentlastung des Wellrohres erfolgen.

Der Wellrohrhalter kann vorzugsweise einen plattenförmigen Berührschutz aufweisen, der den Zwischenraum zwischen der unteren Kante der Wellrohraufnahme und den Rastnasen der Rasthaken abdeckt. Durch diesen Berührschutz ist die Mediabox nach dem Anschließen der Kabel nach außen hin so abgedichtet, dass keine stromführenden Bauteile berührt beziehungsweise datentechnischen Bauteile manipuliert werden können.

In einer zweiten Ausführungsform kann der Bauteilhalter als Hutschienenhalter ausgebildet sein. Der Hutschienenhalter besitzt zumindest eine Aufnahmeeinheit für eine Hutschiene und zumindest ein Fixierelement unterhalb der zumindest einen Aufnahmeeinheit. Mittels des Fixierelements kann der Hutschienenhalter an dem Lochraster, insbesondere an einem Lochraster für die "LexCom Home"-Schnellbefestigung positioniert werden. Darüber hinaus ist beidseitig der zumindest einen Aufnahmeeinheit jeweils ein Rasthaken vorhanden, mittels denen der Hutschienenhalter an dem Lochraster befestigt werden kann. Ein solcher Hutschienenhalter kann rasch und sicher an dem Lochraster befestigt werden.

Vorzugsweise können zwei nebeneinander angeordnete Fixierelemente vorhanden sein. Dies erleichtert die Ausrichtung und Positionierung des Hutschienenhalters an dem Lochraster.

Eine erste Aufnahmeeinheit für eine Hutschiene kann etwa U-förmig ausgebildet sein, so dass eine Hutschiene von oben in die erste Aufnahmeeinheit eingesteckt werden kann. Dazu kann die erste Aufnahmeeinheit beidseitig jeweils eine nach innen weisende Schulterausprägung aufweisen, auf der die Hutschiene im eingesetzten Zustand aufliegt. Darüber hinaus kann beidseitig jeweils eine nach innen gerichtete Rastnase vorhanden sein, die jeweils oberhalb der Schulterausprägungen angeordnet ist. Die Hutschiene kann in diesem Fall zwischen den Schulterausprägungen und den Rastnasen klemmend gehalten werden. Da die Hutschiene lediglich von oben in den Hutschienenhalter eingerastet werden muss, kann eine Montage der Hutschiene auch noch nach der Montage des Hutschienenhalters an dem Lochraster erfolgen.

Alternativ oder zusätzlich zu dieser ersten Aufnahmeeinheit kann zumindest eine zweite Aufnahmeeinheit für eine Hutschiene vorhanden sein. Eine solche zweite Aufnahmeeinheit kann beidseitig jeweils nach innen weisende Führungsschienen aufweisen, zwischen denen eine Hutschiene lagefixierbar ist. Die Hutschiene muss in diesem Fall mit ihrem Endbereich in die zweite Aufnahmeeinheit eingeschoben werden. Dadurch sollte die Montage der Hutschiene an der zweiten Aufnahmeeinheit in der Regel bereits vor der Montage der Hutschienen an dem Lochraster erfolgen. Grundsätzlich können mehrere zweite Aufnahmeeinheiten für Hutschienen vorhanden sein, die jeweils untereinander angeordnet sein können.

Weitere Vorteile und Merkmale der Erfindung sind den in den Ansprüchen ferner angegebenen Merkmalen sowie den nachstehenden Ausführungsbeispielen zu entnehmen.

### KURZE BESCHREIBUNG DER ZEICHNUNG

Die Erfindung wird im Folgenden anhand der in der Zeichnung dargestellten Ausführungsbeispiele näher beschrieben und erläutert. Es zeigen:

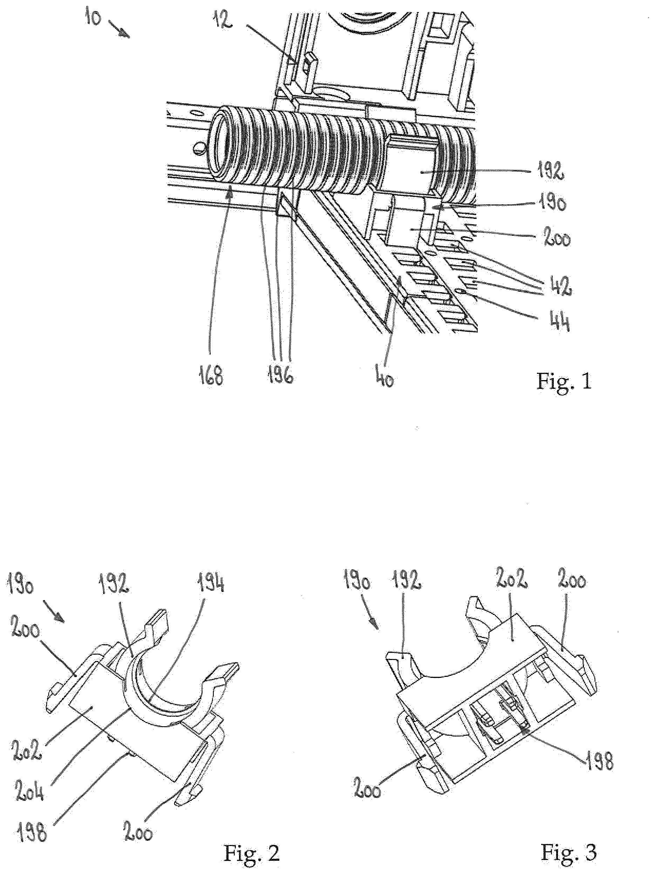

- Fig. 1: eine perspektivische Ansicht eines an der Grundplatte einer Mediabox befestigten Wellrohrhalters nach der Erfindung,
- Fig. 2: eine perspektivische Ansicht des Wellrohrhalters gemäß Fig. 1,
- Fig. 3: eine perspektivische Ansicht der Unterseite des Wellrohrhalters gemäß Fig. 1 und 2,
- Fig. 4: eine perspektivische Detailansicht eines an der Grundplatte der Mediabox befestigten Hutschienenhalters nach der Erfindung,
- Fig. 5: eine perspektivische Ansicht des Hutschienenhalters gemäß Fig. 4 mit daran befestigten Hutschienen,

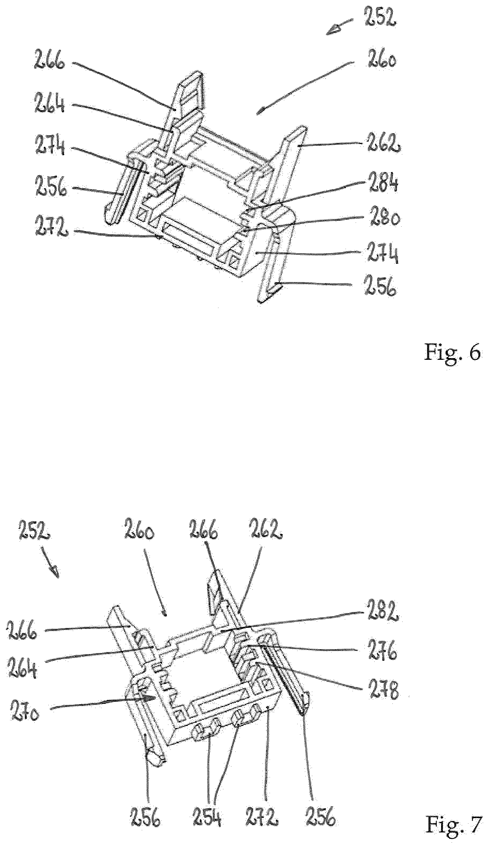

- Fig. 6: eine perspektivische Ansicht des Hutschienenhalters gemäß Fig. 4 und 5 und
- Fig. 7: eine perspektivische Ansicht der Unterseite des Hutschienenhalters gemäß Fig. 6.

### WEGE ZUM AUSFÜHREN DER ERFINDUNG

Eine Mediabox 10 besitzt eine rechteckige Grundplatte 12, die an zwei parallelen Metallschienen befestigt werden kann. In einer solchen Mediabox 10 können unterschiedliche elektronische Bauteile untergebracht werden. Die Bauteile können mittels "LexCom Home"-Komponenten oder Schrauben direkt an der Grundplatte 12 befestigt werden. Alternativ dazu können die Bauteile auch auf Hutschienen 250 befestigt werden. Die Hutschienen 250 selbst können in diesem Fall über Hutschienenhalter 252 an der Grundplatte 12 befestigt werden.

Die Grundplatte 12 der Mediabox 10 besitzt eine rechteckige Montageplatte 40. In der Montageplatte 40 ist ein erstes Lochraster 42 vorhanden, das für eine "LexCom Home"-Schnellbefestigung ausgelegt ist. Darüber hinaus ist in der Montageplatte 40 ein zweites Lochraster 44 vorhanden. Das zweite Lochraster 44 weist kreisförmige Durchbrüche auf und ist für eine flexible Schraubbefestigung von Bauteilen ausgelegt.

Um in die Mediabox 10 ein Wellrohr 168 möglichst geschützt einführen zu können, können an der Montageplatte 40 erfindungsgemäße Bauteilhalter in Form von Wellrohrhaltern 190 angebracht werden. Der Wellrohrhalter 190 besitzt eine C-förmige Wellrohraufnahme 192, in die ein Wellrohr 168 eingeklipst werden kann. Die Wellrohraufnahme 192 besitzt eine innen umlaufende Profilfeder 194. Diese Profilfeder 194 kann in eine Nut 196 des Wellrohrs 168 eingreifen, so dass das Wellrohr 168 lagefixiert in der Wellrohraufnahme 192 gehalten wird. An der Unterseite der Wellrohraufnahme 192 ist ein Fixierelement 198 vorhanden, das in eine der "LexCom Home"-Ausnehmungen 42 der Montageplatte 40 eingesteckt werden kann. Darüber hinaus ist seitlich der Wellrohraufnahme 192 beidseitig jeweils ein Rasthaken 200 vorhanden. Die beiden Rasthaken 200 können in weitere "LexCom Home"-Ausnehmungen 42 der Montageplatte 40 eingesteckt werden, um den Wellrohrhalter 190 an der Montageplatte 40 zu befestigen. Der Wellrohrhalter 190 besitzt darüber hinaus einen plattenförmigen Berührschutz 202. Dieser Berührschutz 202 umspannt den Zwischenraum zwischen der Unterseite des Wollrohrs 168 beziehungsweise der gebogenen unteren Kante 204 der Wellrohraufnahme 192 und der Montageplatte 40. Dadurch wird der untere Bereich verdeckt und die Sicherheit der Mediabox 10 gewährleistet.

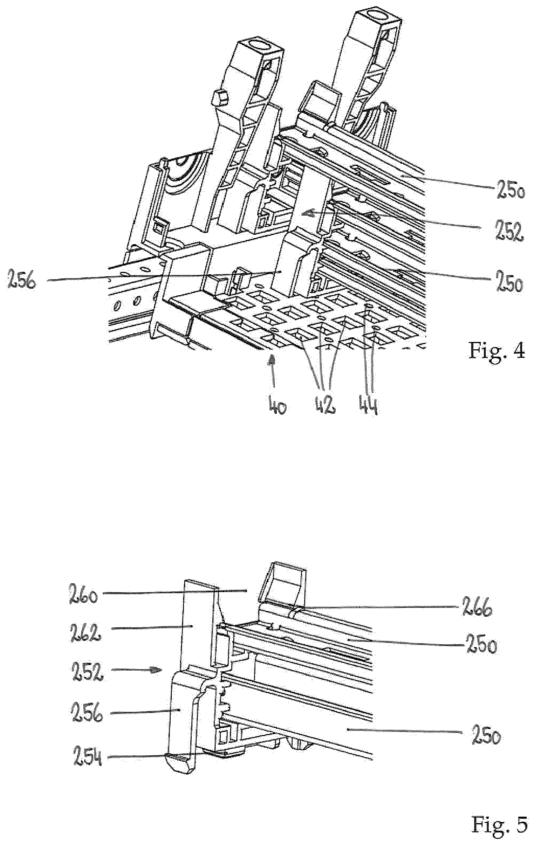

Um Hutschienen 250 an der Grundplatte 12 der Mediabox 10 befestigen zu können, kann ein Bauteilhalter in Form eines Hutschienenhalters 252 eingesetzt werden. Entsprechend Fig. 4 kann der Hutschienenhalter 252 an der Montageplatte 40 angebracht werden. Der Hutschienenhalter 252 besitzt dazu zwei Fixierelemente 254, die jeweils in eine der "LexCom Home"-Ausnehmungen 42 der Montageplatte 40 eingesteckt werden können. Darüber hinaus ist seitlich des Hutschienenhalters 252 beidseitig jeweils ein Rasthaken 256 vorhanden. Die beiden Rasthaken 256 können in weitere "LexCom Home"-Ausnehmungen 42 der Montageplatte 40 eingesteckt werden, um den Hutschienenhalter 252 an der Montageplatte 40 zu befestigen.

Der Hutschienenhalter 252 besitzt darüber hinaus eine U-förmige erste Aufnahmeeinheit 260 für eine Hutschiene 250. Die erste Aufnahmeeinheit 260 besitzt an ihren beiden seitlichen Schenkeln 262 jeweils eine nach innen weisende Schulterausprägung 264, die eine eingesetzte Hutschiene 250 von unten abstützen. Oberhalb der Schulterausprägungen 264 ist jeweils eine ebenfalls nach innen weisende Rastnase 266 einteilig an den seitlichen Schenkeln 262 angeformt. Die Hutschiene 250 kann somit von oben in die erste Aufnahmeeinheit 260 eingesteckt und zwischen der Rastnase 266 und der Schulterausprägung 264 klemmend gehalten werden. Am unteren Randbereich der beiden seitlichen Schenkel 262 der ersten Aufnahmeeinheit 260 sind die beiden Rasthaken 256 einteilig angeformt.

Unterhalb der ersten Aufnahmeeinheit 260 ist im vorliegenden Beispielsfall ein Rahmenelement 270 vorhanden. An der Unterseite des unteren waagrechten Schenkels 272 des Rahmenelement 270 sind die beiden Fixierelemente 254 einteilig angeformt. An den beiden seitlichen Wandelementen 274 des Rahmenelements 270 sind im vorliegenden Beispielsfall jeweils zwei nach innen weisende Führungsschienen 276, 278 einteilig angeformt. Dabei bilden die beiden Führungsschienen 276, 278 gemeinsam eine zweite Aufnahmeeinheit 280 für eine Hutschiene 250. So kann eine Hutschiene 250 mit ihrem Endbereich zwischen die beiden Führungsschienen 276, 278 eingeschoben und dort lagefixiert werden. Der obere waagrechte Schenkel 282 kann ebenfalls als Führungsschiene dienen und somit gemeinsam mit der oberen Führungsschiene 276 eine weitere Aufnahmeeinheit 284 für eine Hutschiene 250 bilden. Auch in diese Aufnahmeeinheit 284 kann eine Hutschiene 250 mit ihrem Endbereich eingeschoben werden. Durch die unterschiedlichen Aufnahmeeinheiten 280, 284 können Hutschienen 250 mit unterschiedlichen Abmessungen an dem Hutschienenhalter 252 befestigt werden. So können beispielsweise sowohl Hutschienen 250 mit einer Tiefe von 7,5 Millimetern als auch Hutschienen 250 mit einer Tiefe von 15 Millimetern an dem Hutschienenhalter 252 befestigt werden.

## Patentansprüche

1. Bauteilhalter (190, 252) zur Befestigung an einem Lochraster (42), insbesondere an einem Lochraster (42) für die LexCom Home-Schnellbefestigung,
- mit einer Bauteilaufnahme (192, 260, 280, 284),
- mit zumindest einem Fixierelement (198, 254) unterhalb der Bauteilaufnahme (192, 260, 280, 284), mittels dem der Bauteilhalter (190, 252) an dem Lochraster (42) fixierbar ist,
- mit zwei Rasthaken (200, 256), mittels denen der Bauteilhalter (190, 252) an dem Lochraster (42) befestigbar ist, wobei die beiden Rasthaken (200, 256) beidseitig der Bauteilaufnahme (192, 260, 280, 284) angeordnet sind.

2. Bauteilhalter nach Anspruch 1,
- **dadurch gekennzeichnet, dass**
- der Bauteilhalter (190) als Wellrohrhalter ausgebildet ist,
- die Bauteilaufnahme als C-förmige Wellrohraufnahme (192) ausgebildet ist.

3. Bauteilhalter nach Anspruch 2,
- **dadurch gekennzeichnet, dass**
- die C-förmige Wellrohraufnahme (192) zumindest eine Profilfeder (194) aufweist.

4. Bauteilhalter nach Anspruch 2 oder 3,
- **dadurch gekennzeichnet, dass**
- der Wellrohrhalter (190) einen plattenförmigen Berührschutz (202) aufweist, der den Zwischenraum zwischen der gebogenen unteren Kante (204) der Wellrohraufnahme (192) und den Rastnasen der Rasthaken (200) abdeckt.

5. Bauteilhalter nach Anspruch 1,
- **dadurch gekennzeichnet, dass**
- der Bauteilhalter (252) als Hutschienenhalter (252) ausgebildet ist,
- die Bauteilaufnahme als Aufnahmeeinheit (260, 280, 284) für eine Hutschiene (250) ausgebildet ist.

6. Bauteilhalter nach Anspruch 5,
- **dadurch gekennzeichnet, dass**
- zwei Fixierelemente (254) vorhanden sind, die mit einem gewissen gegenseitigen Abstand zueinander unterhalb der Aufnahmeeinheit (260, 280, 284) angeordnet sind.

7. Bauteilhalter nach Anspruch 5 oder 6,
- **dadurch gekennzeichnet, dass**
- eine erste Aufnahmeeinheit (260) für eine Hutschiene (250) etwa U-förmig ausgebildet ist,
- die erste Aufnahmeeinheit (250) beidseitig jeweils eine nach innen weisende Schulterausprägung (264) aufweist, auf der die Hutschiene (250) abstützbar ist,
- die erste Aufnahmeeinheit (260) beidseitig jeweils eine nach innen gerichtete Rastnase (266) aufweist, so dass eine Hutschiene (250) zwischen den Schulterausprägungen (264) und den Rastnasen (266) klemmend haltbar ist.

8. Bauteilhalter nach einem der Ansprüche 5 bis 7,
- **dadurch gekennzeichnet, dass**
- eine zweite Aufnahmeeinheit (280, 284) für eine Hutschiene (250) beidseitig jeweils zwei nach innen weisende Führungsschienen (276, 278, 282) aufweist, zwischen denen eine Hutschiene (250) lagefixierbar ist.
